# EUROPEAN PATENT APPLICATION

(11) **EP 3 065 336 A1**
(43) Date of publication of application: **07.09.2016**
(21) Application number: 13898971.0
(22) Date of filing: 11.12.2013
(51) Int. Cl.: H04L 12/00, G06F 13/00

(54) **UNITARY TELEMATIC SYSTEM FOR SPACE MANAGEMENT, WITH A UNIVERSAL GENERAL PURPOSE**

(71) Applicant: Nearby Sensors, S.L., 08035 Barcelona (ES)
(72) Inventor: SAGARRA RIUS, Juan Ramón, E-08035 Barcelona (ES); RECASENS CONTINENTE, Adria, E-08035 Barcelona (ES); PONS DOZ, Berta, E-08035 Barcelona (ES); GUILANIU BOU, Joaquim, E-08035 Barcelona (ES); HUERTAS JANOT, José Manuel, E-08035 Barcelona (ES); VAQUES BROC, Rafael, E-08035 Barcelona (ES); GARCIA-BRAGADO ACIN, Ramón, E-08035 Barcelona (ES); MASO CERDA, Ricard, E-08035 Barcelona (ES); VILADEGUT GARRAY, Javier, E-08035 Barcelona (ES); BLASCO RODRIGUEZ, Yolanda, E-08035 Barcelona (ES)
(74) Representative: Morgades y Manonelles, Juan Antonio
(86) International application number: PCT/ES2013/070870
(87) International publication number: WO 2015/086865

(57) **Abstract**

The system has as object the integral control of spaces starting from primary low level information obtained from the distribution of sensors and the corresponding actuators permitting as well the interaction with sensors-actuators of ofimatic or administrative character. The system of the invention unlike the known systems is a unitary and general purpose system in the sense that the same system (hardware and software), serve for any space to be controlled (parking lots, libraries, hospitals, hotels, building spaces and other).

## Description

### Object of the Invention

The disclosed system has as an object the integral control of spaces starting from a primary information, generally low level information, obtained from an arrangement of sensors and from the corresponding actuators, "sensor" being understood in this disclosure with a broad sense (including among others video cameras with image analysis, interconnecting telephones, monitors, screens and others). The system permits as well the interaction with sensors-actuators of ofimatic or administrative character, for instance, devices for warning of non-payment at the entrance of a parking space.

The system of the invention is unitary and of a general purpose, in the sense that the same system (hardware and software), may be used for the control of any kind of space (parking space, public libraries, hospitals, hotels, building spaces and others) and for any general service to be performed within an space (access control, air conditioning, energy control, occupation of spaces, lighting control and others), although it is also useful for specific services like those given in determined spaces / environments as the occupation of parking spaces, electrical consumption of mooring spaces for boats, lighting of the illumination system when somebody is in front of a picture in a museum, registration of vibrations in a building, among others.

### State of the art

The main difference in relation to similar systems of the state of the art is that the new system is not directed to the control of industrial processes or infrastructures as the systems, typically specialized in the control of spaces or services, improving in all aspects the present systems which have been developed under the general concept of domestic computer control or "domotics".

Different types of systems exist currently on the market and therefore may be considered as the state of the art, designed to control the services in all types of spaces and buildings, typically systems for the control of water, gas and electricity although there are also systems addressed to fire control, fire fighting, systems for control by means of cameras and proximity sensors, domotics, telephone systems and others.

Thus, each installation requires specific elements to permit its operation and to fill its purpose, incorporating since some years ago a part for the centralisation of commanding elements needed for its usual operation and for its control in situ or from a remote distance by means of RF emissions or by means of purely electrical, telephonic and other kinds of signals.

This form of operation and control, usually includes, although not exclusively, a computer to process all kinds of signals and which by means of the corresponding software permits the automatic operation, govern and control without needing the assistance of an operator to process the signals according to the circumstances, as the program in the computer when receiving the suitable signals from the different points of the installation executes the suitable instructions.

In the frequent case in which in the same space, whether an apartment building or another type of building as those usually called public buildings various installations of the above mentioned type coincide, the centralization of each one of those installations is materially made in different points, for which reason there are multiple computers, each one of them with its corresponding program, strewn around with the necessary wiring for each of them connecting the different points of each installation with its central computer, having recourse in some cases to a false centralization of the installations or to a high level integration, being materially located in the same room, where the different screens and computers are located, but each one of them governs and controls its corresponding installation.

This kind of false centralization of the different installations and the corresponding services, apart from bringing a high cost, forces to set up complex wiring systems inside of the building, independently of its nature, and requires the different industrialists carrying out the implementation of the systems to adapt themselves to implementation systems of a certain complexity with the consequence in some cases of some interferences among the components of each system, especially when the form to link the different controlled points of each installation with the central computer by means for radio-frequency signals, could be affected by other signals from other installations and services.

Usually in the general purpose spaces (libraries, museums, parking lots, marinas, and others) the sensors/actuators belong to specific systems: access control, safety, ventilation, lighting, emergency lighting, air conditioning, intercommunication, monitorization, etc., and others, each of the installations having its control system which can be implemented electrically (by means of wired logic) or electronic (microprocessors).

Typically, every one of this systems has its specific communications wiring (the same system may use a bus, but different systems usually do not share the bus nor the wiring or microprocessor) running along the whole space until reaching the point of centralized control.

Also, the criteria for electric supply (the lines coming out of the control board) respond to space considerations (floors, rooms, typical for lighting systems) and functional considerations (ventilation, pumping, elevators and others). On the other side, the lines having the responsibility of an special service are fed from generators or uninterrupted feeding systems based on batteries, normally called "assisted" lines. These lines, the same as the communication lines, run along the whole space between the control boards and the location of the load points to be fed.

From Spanish Patent No. 2078831 is known "a domotic system with the aim to simplify the different technical installations within a dwelling, which reduces the wirings and duplicity of functions, having various modules or management units controlled by means of microcontrollers (1) which communicate to each other which in its turn control various peripheric elements (sensors 2, actuators 3), by means of a bidirectional asynchronous communications bus (6)". It is a modular system with an open configuration thanks to the autonomous and independent operation of each management unit which permits the system to be adapted to the needs of the user.

Alternatively, in Spanish Patent No. 2133118 a domotic system is described for the smart control of a private home having a bus topology (15) which runs along the whole installation and permits its management by means of a communications control and a distributed system. The feeding of the system comes from two separate sources: feeding by means of direct current at 24-48 volts (16) and feeding by means of alternating current with 110-220 volts (17).

In relation with Spanish Patents No. 2078831 and No. 2133118, which have been cited above, it has to be remarked that, while the principle may be similar, the form to carry out the same as well as their performance are very different,. In the present invention it is not started from primary electrical elements, but profit is taken from the normalisation advantages which have occurred in the last times, especially concerning internet, programming languages and the price of processors and sensors.

The very date of filing of the above mentioned patents are an indication of the development which could be technically available back in the years 92 y 97 especially concerning telecommunications and internet. Some concrete aspects supporting these differences are to be found in:
- System for directing the devices. The directing system is based in the IP standard. Thus, from any place of the world the user is able to direct the different elements configuring the system and consequently to operate the system. This permits to separate the processing of the services from the network where the elements are physically located.
- The form to program and to interactuate with different elements changes also in a substantial way. In the above cited cases it is something specific for every computer or system and in the present case it is based in the http(s) standard which is common to practically all internet browsers. The form to present the information, the interface man-machine is a browser in all the cases not requiring any specific software.

- The physical network is in the present invention the Ethernet standard, admitting WiFi, Power Over Ethernet (POE) and PowerLineComunications, which are clearly differentiated from the more or less primary alternatives which permitted the computer networks back in the dates in which said patents were filed.
- The purpose of both mentioned patents is to monitorize, with a reduced capacity to modify the processes and programs. In the present invention the purpose is to integrate the low level information on which the services are to be programmed in an easy form of modification.
- Finally, the differences concerning analogic elements in both patents have to be remarked as they have been surpassed as present.

On the other side in US Patent No. 201201141 A1 a system and method are disclosed to be implemented by means of a computer for the integrated management of state data and control actions (heating, ventilation, air conditioning, safety, elevators, lighting, alarms, etc.) in smart buildings. It facilitates carrying out universal consultations or the management commands requiring information from multiple subsystems although they do not share protocols or show incompatibilities for coming from different manufacturers.

In relation with US Patent No. 201201141 the main differences are as follows:
- Said patent is addressed to a high level integration, starting from the subsystems from the building. In the present invention a low-level integration is pretended.
- In said Patent the system is addressed to the reply of questions posed to the system. Said system structures the information to guarantee the availability of the replies. In the present invention low level information is available, typically from the field processors which may be addressed from any place in the world. Based on said availability the invention system is provided with pre-defined services which typically are processed in the cloud. The system permits the maintenance and updating of its own services.
- A part of the jobs addressed by the present invention are directly solved with the protocols IP and HTTP. These protocols permit to separate the place of processing of the services in respect to the place in which these services are performed.

Finally, USA No. 2010318200 discloses a system and method for unified graphic presentation of the information corresponding to an integrated management system of the different installations (alarm, safety, lighting, etc.) in a smart building, permitting to take operative decisions in real-time aim and reducing energy consumption.

In relation with U.S. Patent No. 2010318200 the main differences are follows:
- The final objectives to be obtained are similar to those of the present invention, while the overall arrangement and the form to obtain the same is substantially different. The patent is aimed at a arrangement of a dashboard (viewing panel) showing the situation within a certain space and gives the possibility to command some elements as an additional service. In the present invention the object is to industrialize the programmation of services in given spaces based on sensors and actuators and other hardware elements.
- Again the integration pretended in said patent is a high level integration with centralized information, while in the case of the present invention the integration is of a low level with mainly distributed information from the services.

### Purpose of the Invention

The purpose of the invention is, for any type of space, the simplification of the installations, the industrialization of the control services, the regulation and monitoring and the possibility to have access from any place to all information from all deployed services. This is obtained by means of the use of microprocessors distributed in the space every "X" square meters, where the sensors and actuators are connected and to which, generally arrive only two wires, one power wire and one data wire. The data wire is the wire collecting the information from the sensors and administering the connection to the power mains. All of it is managed from any Internet browser.

The device of the present invention is addressed to the management of the installations in certain spaces and the purpose of the invention is justified by the reduction in price which generally is occurring in the electronic field, incidentally by the cost of the microprocessors (after the appearance of Arduino or RasberryPi) and the sensors, apart from the increase of the demand of this type of devices, as well as the reduction of wiring, its installation and maintenance costs.

The inventor does not have evidence of a system with these features known on the market. The arrangement of field elements (sensors and actuators understood with a broad sense), controllers (or microprocessed equipment) and telecommunication equipments, together with the corresponding software, provide a system easy of use, flexible, scalable and easy to industrialize which are not to be found in other products of the market.

### Description of the invention

Currently are to be considered as state of the art, sectorial equipments (installations or services) such as safety, air conditioning, elevators, electricity, or fire protection systemes, incorporating each of said equipments individual networks consisting of conductors or wires with specific materials their data and applications, being integrated in each of said equipments, with the aim to obtain monitorization, registration, control and automation.

The telematic management system of the present invention is designed in order that every sensor and actuators installation, which can used to serve different installations and/or services, may share a unique network which will have a unified management system, applying to said system the corresponding monitorization, registration, control and automation.

The system is based in the telecommunications IP networks interconnection in different fields and levels (LAN - WAN), and the distribution in the space to be controlled of the processors and general purpose controllers. It is to be mentioned that the system is developed based on low-cost devices of the type Raspberry Pi or Arduino, although the composition is valid for any other processor / controller.

The microprocessed equipments distributed in the space to be controlled carry out a double function. On the one side they serve for the local control and regulation jobs by the application of rules at local level, and on the other side, they serve as gateways with the general network and the part of the system which is located in the cloud.

The interconnection of the elements is made using the potential provided by the internet protocols which permit to make the programmation of the different parts of the system independent, and to be used with a conventional browser, in form of a web service or by means of a simple application with all type of terminals.

The new system is based on a set of sensors/actuators which for a given surface are connected to a microprocessor. This system has a database containing the features identifying each of the sensors/actuators by means identification parameters. At the moment of installing a new sensor/actuator it is sufficient to identify the same with the corresponding type in the database in order that the system may identify the element automatically allocating to it the suitable parameters and functions.

The microprocessing equipments to which the sensors/actuators are connected and from which the information is to be collected, are identified in the system in a database where an IP is allocated to them to have the capacity to access to said information which is retrieved from any part of the world.

Therefore, the system uses a modular computer system, being based on a database of sensors/actuators, a second arrangement of microprocessed equipments and a third services system which will be controlled in the objective buildings or premises. These databases have to be previously loaded in the equipment and services of the installations, and starting from this point, they will be valid for any installation, as the generation of software for the control and management is practically automatic. Its allocation to a microprocessor equipment permits to carry out the location and collection of data, as well as the definition of the services to be made available in the building or premises permitting to group the data of the sensors/actuators, in a concrete area which a needed to control and manage said services.

Starting from the definition of the elements in the database any combination "sensor/actuator-controller" and "controller-service" is possible.

In order to understand the document it has to be understood as sensor all type of devices permitting the capture of a state (logic 0 or 1, and scalar or vectorial magnitudes), sound or images. The equipments permitting to capture these states are the same microcontrollers, but the system of the invention goes further, being orientate to the new controllers, as RasberryPi or IP video cameras. Concerning the actuators it has to be understood a similar definition as above, with actuators which operate starting from relays or contactors for switches or by means of the use of variable signals (Power With Modulation-PWM-, tension levels and others) for actuations permitting regulation.

The whole unitary network will be equipped solely with two wires, one power wire and a data wire, being the control and operation of the space carried out by means of the data wire, having as well a computing system of its own with a corresponding software where it is connected, which originates a new generation of integrated services.

The computer system mediates between the field elements to be used (sensors and actuators) and he system for the presentation of data to the user. This computer system has native services which take profit of the registration of all the control operations, for instance (management, band width management, services based on sensors and actuators for services of different sectors), which will be transferred to a local computer, which if desired or needed can reach the computer of the remote user by means of the corresponding Internet server.

After the installation of the computer system has been completed, the field elements which it is wished to "load and provide" are described to the same. For some of the services the equipment in which they will be processed can be selected (local controller, adjacent controllers, local heading, in the cloud, or exceptionally, the terminal of the user), while with a general character they will be processed in the cloud where additionally, the historical data will be stored, the access permissions will be managed, and initially independent installation may be interrelated.

The system may be applied to spaces of all type with different levels of equipment, and the installer may carry out remotely the programmation, giving reply to the questions presented by the system, based on the devices and services available in the database. In fact, it is a configuration of the installation based on an automatized programmation.

An installation equipped with the telematic system of the invention is completely scalable, having the capacity to incorporate new sensors-actuators by means of a redefinition of the installation with the incorporation of new pieces of equipment or lastly, defining a new installation on the same network.

The maximum potential of the telematic system is reached when all the components existing in the controlled space are connected to the system, which will permit to apply management criteria to the whole installation. Some examples of these services are as follows:
- The integral management of the energy consumption (including the possibility to have power generation available).
- Prioritization of the loads in case of lack of supply using uninterruptible supply equipments.
- To give the order to the whole installation of opening doors.
- Remote maintenance of the installation.

In these cases the design criteria for the management of the telematic system is based in locating in a microcontroller an electric supply means every X square meter of the space to be controlled, being X an optimum for each type of space and equipment level.

To said microcontroller all the closely located sensors/ actuators will be connected, both with the purpose of establishing electric supply (through the relays, contactors or other required elements) as well as for management of the information, escalating data and the decisions for connection/ disconnection from the telecommunication network.

With all the aforegoing, a new concept for installations and services is obtained, which based on a two wire connection of the sensors / actuators installed, one wire for the electric supply and another wire for data (obtaining a more rational and economic installation) connected to microprocessors every given surface, connected by means of the telematic network, a control and management system of unique characteristics may be obtained for any service to be provided in the building, as all the elements of the base are identified (sensors/actuators) giving ground to a low level integration and therefore its control and management will carry out the collection of data for its management as a whole according to the service to be given, avoiding a high level integration which is costly and complicated to adapt to different services which have their basic data already processed.

Other data and features of the invention will be evidenced by means of the following description, which refers to the annexed drawings showing as an illustrative but not limitative example a graphic representation of the invention.

### Description of the figures

Figure 1 shows a diagrammatic view of the type of systems used prior to the present invention and which may be taken as state of the art.
Figure 2 is a diagrammatic representation of the telematic system of the invention, graphically arranged as the previous figure.
Figure 3 is a diagrammatic block representation showing the main components of the telematic system of the invention.

In the above figures of drawings the composing parts contained in the drawings have been listed as follows: (10) telematic management system, (11) safety installation, (12) air conditioning installation (13) elevators, (14) other installations, (15) individual Networks, (16) work post, (17) PC-computer, (18) field Microcontroller/ Microprocessors, (19, 20, 21, 22) sensors/ actuators, (23) network, (24) management system in the cloud, (25) LAN Local Area Network, (26) space to be managed, (27) front end computer, (29) VPN communication protocol, (30) PC-Terminal, (31) Smartphone / tablet terminal, (32) telematics system of the invention, (33) central server, (34) communication protocol.

### Description of an embodiment of the invention

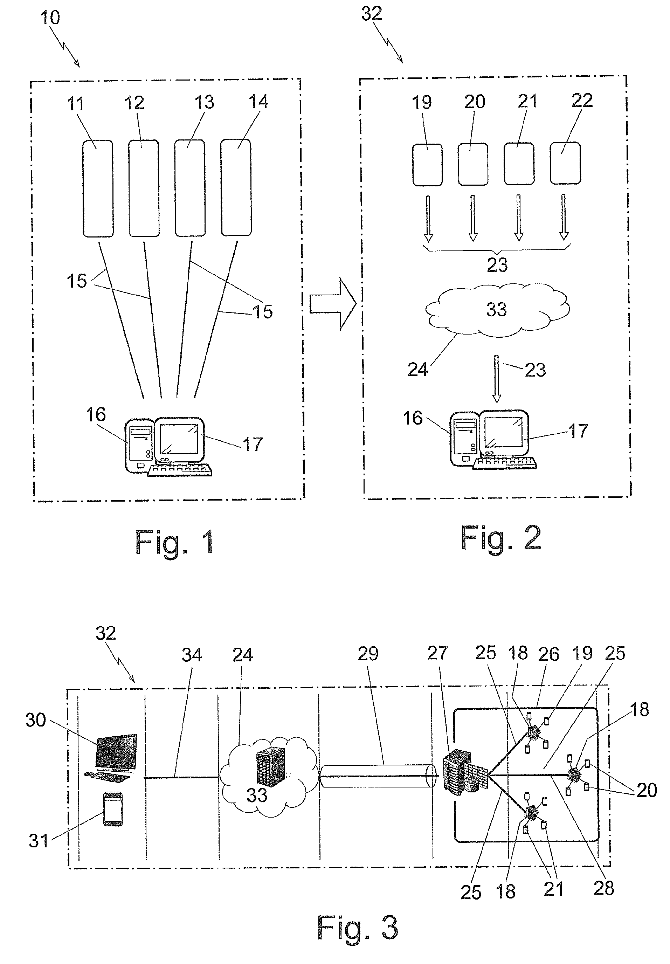

As may be observed in Figure 1 showing generically one telematic system of already known type, of a conventional type (10), it comprises the surveillance and control of sectorial equipments, such as safety installations (11), air conditioning (12), elevators (13), and other installations (14), which by means of individual networks (15) integrate data and applications according to the sectorial applications of each of them, forwarding the same to a work post (16) in which an operator will receive all of the inputs in the PC (17).

In a generic form the telematic system of the invention (32), integrates among other the following elements:
- Sensors and actuators S/A (19, 20, 21 and 22).
- Field microcontrollers (18).
- Front-end communication computer (27).
- LAN (25) acronym for Local Area Network.
- Space to be managed (26)
- Communication protocol VPN (29) between the space to be managed and the management systems in the cloud.
- Management system in the cloud (24) with central server (33).
- Communication protocol (34), between the management system in the cloud and the user from any part of the world having Internet connection available.
- User terminal, whether a PC (30), Smartphone, tablet (31), having a browser web supporting the https protocol.

Thanks to the telematic system of the invention (32), diagrammatically represented in Figure 1, the system (10) has been developed as shown in Figure 2 so that it comprises, as is to be appreciated in Figure 3 a set of sensors/actuators S/A (19), (20), (21), (22) arranged in different points of the space to be controlled (26), which give ground to digital entrances and outlets, such as for signalling devices for the end of run, switches, contactors, push-buttons and others, as well as analogic entrances and outlets (temperature, humidity, position, speed of a motor and similar in said installations (11 to 14).

Additionally and as equivalent elements to the sensors / actuators (19 to 22), means for capturing images are arranged to be implemented by means of photographic video cameras and similar elements not shown in the figures. In all cases, the primary unprocessed signals will be taken from them with the lowest possible level, to be capable of a first information in the different services and to carry out the most suitable process in each of said services, except in cases using sensors and actuators incorporating a microprocessor (18), in which cases the communication will be carried out in the available connection, for instance (RS232, RS485 and similar) so that it will be the microprocessor (18) of the network (23) the one normalizing the information to be unitarily dealt with together with the other informations.

The sensors/actuators (19-22) connected to the microcontrollers (18) send the information thanks to a local area network LAN (25) and through a front-end computer (27) reaching the central server (33) of the management system.

The installations (11 to 14) only may contain sensors/actuators which have been previously recorded in the database. Said database will store information such as:
- The features of the sensor
- The features of the variables which will store the data of said sensor in the system: name, type of variable, resolution and others.
- The refreshment times for said data.
- The initiative for the communication.

In case of a microprocessed sensor/ actuator, the database will contain the integration form of for this piece of equipment with the system (communication form, communication program with the field processor and others).

The same physical sensor/actuator may have different descriptions in the system based on:
- The service being performed: for example, a thermometer providing ambience temperature, in comparison to a thermometer regulating the compressor of a cooling machine, a video camera, through which different facts may be captured,
- The programming language of the field microprocessor: Phyton is used for Raspberry-Pi and C ++ for Arduino with the capacity to connect the same equipment in both cases.

Other elements of the telematic system (32) of the present invention consist in the field microcontrollers (18).

These are equipments in which the main component is the microprocessor or microcontroller and they are connected to the local network of the space to be controlled initially by means of a RJ45 connector, while it could be as well by means of WiFi, or Power-Line-Communications. As has been explained said microprocessor (18) is used both for the needs for local processing, as well as for actuating the server/ client web in respect to the network.

The proposed telematic architecture is valid for any equipment of this type with the capacity to use any "Universal Remote Station". The suitability to follow this initiative is based in the marketing of very low price microcontrollers for general purpose, as well as the substantial reduction in the price of sensors and actuators of conventional type now on the market.

Generally, Raspberry-Pi will be used, alone or together with modules to solve the treatment needs of low-level for a concrete space. Thus, it may be associated with other devices such as:
- Arduino: for demanding jobs as to reply time and/or many digital entrances and outlets (E/SD).
- PiFace Digital: to use outlets with relays apart of E/SD directly in the electronic card.
- Gertboard: to use analogic entrances and outlets (E/SA)
- RasPiComm: for sensors actuators with series communications.
- Others.

These equipments will be assembled inside of boxes not exceeding 20x40 cm and 15 cm deep, together with:
- A 5V power source (eventually a 12 V power source will be added)
- A magneto-thermic protection in the box itself, and in case of using contactors, a protection for each outlet (in case of very high power rating the corresponding electrical protections will be assembled in an external box),
- An over-voltage release device
- Terminal strips to cover all the possibilities for the equipments inside the box,

As a whole a protection degree IP54 will be reached.

Another of the elements of the telematic system (32) of this invention is a front-end communication computer (27) such as a totally conventional personal computer.

In this case it is a conventional personal computer, initially aimed at acting as telecommunication front-end, for which reason it carries out the function of firewall for the local network, being associated to the Ethernet switch and to the router.

Generally the system is remotely governed as to be seen in Figure 3; in case of loss of the link with the WAN network it actuates as back-up of the server (33) for the services, which is in the cloud to guarantee the continuity of the operation in the space, local modus.

It incorporates a copy of the software of all the field microprocessors (18), and with its assistance the updating of the software is carried out as well as the maintenance jobs for the installation.

The local network of the system (25) as may be seen in Figure 3 is the network running inside the space to be controlled (26), typically an Ethernet family network, according to the needs of band width it will can be a post ethernet or a gigabit ethernet. Generally grade 6 wire will be used, which can be complemented with wifi links or Power Line Communications links.

As to the server (33) in the cloud (24), any operator can be used giving this kind of service and having computers to process the corresponding parts of the information from all the installations corresponding to the services to be controlled (11 to 14) and they will be kept in the suitable spaces offered by specialized operators with a high service guarantee (TIER III or IV).

Finally the user terminal (30, 31) can be of any type, with the unique essential characteristic to incorporate a browser web supporting the https protocol.

In respect in the software used by the telematic system of the invention and which will be protected under the schemes for Intellectual Property, it has to be stated that the system is based in the capacity to address all the elements by any processor, both from the installation or external to the installation.

When recording the installation, the telematic system (32) will be instructed on which pin of each microprocessor (18) is connected each of the elements. This information, together with the IP address of the microprocessor (18) and the identifier of the installation, will permit to address any element and to automatize this addressing.

All field microprocessors (18) are equipped, apart from the corresponding software for the capture of field data, execution of instructions from the field, and eventual processing of the data, with a software permitting to operate both as web server or web client.

The relation among all the microprocessors, both field microprocessors (18) as well as in the cloud, is a client-server relation with a protocol tower of the type:
- Application: HTTPS.
- Transport: SSL/TLS + TCP.
- Network: IP.

With the addressing and access capacity to each of the elements independent from the rest, the features of these elements and the definition of the services to be provided (corresponding rules or code lines), are programmed in an automatic and remote form all the field microprocessors (18) and the space (26) is managed from any computer in the world, without the need for the computer to be in the installation or close to it.

Obviously the server (33) in the cloud (24), or, in its case the back-up server, has all the programs available for the management of the services, authorizations, historical data and others. This program (software) may be unitary for all of the installations.

Finally it has to be remarked that to ensure the reply times of the unitary network (23), and the quality of the service the informations requiring much bandwidth (video type) are transmitted through a channel which is independent of the main channel, allotting the corresponding priority level and managing said channel (signalization) through the main channel.

After having sufficiently described the present invention corresponding to the enclosed figures it has to be understood that multiple modifications can be carried out in the same whenever the essentials of the invention are not altered as defined in the following claims.

## Claims

1. **General purpose unitary telematic system for the management of spaces** of the type managing state data and the corresponding control actions of installations such as heating, ventilation, air conditioning, security, elevators, lighting, alarms with universal performance of consultations or management of commands without sharing protocols for the management of spaces and social networks for each installation, **characterized in that** the system comprises:
- Field general purpose microcontrollers or microprocessors, located in the different services to be controlled within the space where the telematic system is installed,
- Sensors and actuators connected to said microcontrollers by means of a LAN.
- A FRONT-END type computer.
- A VPN with encoded communication between the controlled space with the FRONT-END computer and the management systems in the cloud.
- A Management system in the cloud with central server.
- A Communication protocol between the cloud and the final customer.
- A Web browser with interface for smartphone, tablets, PC and similar.

2. **General purpose unitary telematic system for the management of spaces,** according to claim 1, **characterized in that** the S/A sensors actuators give ground to digital entrances and outlets as well as to analogic entrances and outlets in the different services controlled by the telematic system.

3. **General purpose unitary telematic system for the management of spaces,** according to claim 1, **characterized in that** additionally and as equivalent elements to the sensors actuators, image capturing means are incorporated, retrieving from all of them the primary low-level unprocessed signals.

4. **General purpose unitary telematic system for the management of spaces,** according to claim 1, **characterized in that** in cases in which the sensors actuators incorporate a microprocessor, the communication will be carried out based on the connection available to the microprocessor of the types (RS 232, RS 485) and similar.

5. **General purpose unitary telematic system for the management of spaces,** according to claim 1, **characterized in that** the integration of the installations forming part of the system and the data provided for each of said installations by the use of the microprocessor receiving the signals emitted each X square meters from one or various sensors-actuators, is carried out with only two wires, one electrical signal wire and one data wire.

6. **General purpose unitary telematic system for the management of spaces,** according to claim 1, **characterized in that** each installation of the telematic system is provided with sensors and actuators specific of its own, but with identical performances and parameters and the network for all of the installations will be unique, and a unified management system will be applied to the same with the corresponding monitorization, registration, control and automation.

7. **General purpose unitary telematic system for the management of spaces,** according to claim 1, **characterized in that** the microprocessed equipments carry out a double function, the first function for the local control and regulation jobs, and the second function as gateway with the general network and the part of the system located in the cloud.

## Amended claims

### Amended claims under Art. 19.1 PCT

**1. GENERAL PURPOSE UNITARY TELEMATIC SYSTEM FOR THE MANAGEMENT OF SPACES** of the type managing state data and the corresponding control actions of installations such as heating, ventilation, air conditioning, security, elevators, lighting, alarms with universal performance of consultations or management of commands without sharing protocols for the management of spaces and social networks for each installation, **characterized in that** the system comprises:
- Field general purpose microcontrollers or microprocessors, located in the different services to be controlled within the space where the telematic system is installed;
- Sensors and actuators connected to said microcontrollers by means of a LAN;
- A FRONT-END type computer;
- A VPN with encoded communication between the controlled space with the FRONT-END computer and the management systems in the cloud;
- A Management system in the cloud with central server;
- A Communication protocol between the cloud and the final customer;
- A Web browser with interface for smartphone, tablets, PC and similar;
where a set of sensors/actuators are connected to a microcontroller o microprocessor, for the purpose of electrical supply as well as information management, the system having a data base with the features that identify each one of the sensors/actuators through identifying parameters for the system to be recognized and automatically assigns the parameters and self functions and where each one of the microcontrollers or microprocessors are identified in the system of the data base forming a local web connected to the FRONT END computer and thus to the centralized management of the spaces.

**2. GENERAL PURPOSE UNITARY TELEMATIC SYSTEM FOR THE MANAGEMENT OF SPACES,** according to claim 1, **characterized in that** the S/A sensors actuators give ground to digital entrances and outlets as well as to analogical entrances and outlets in the different services controlled by the telematic system.

**3. GENERAL PURPOSE UNITARY TELEMATIC SYSTEM FOR THE MANAGEMENT OF SPACES,** according to claim 1, **characterized in that** additionally and as equivalent elements to the sensors actuators, image capturing means are incorporated, retrieving from all of them the primary low-level unprocessed signals.

**4. GENERAL PURPOSE UNITARY TELEMATIC SYSTEM FOR THE MANAGEMENT OF SPACES,** according to claim 1, **characterized in that** in cases in which the sensors actuators incorporate a microprocessor, the communication will be carried out based on the connection available to the microprocessor of the types (RS 232, RS 485) and similar.

**5. GENERAL PURPOSE UNITARY TELEMATIC SYSTEM FOR THE MANAGEMENT OF SPACES,** according to claim 1, **characterized in that** the integration of the installations forming part of the system and the data provided for each of said installations by the use of the microprocessor receiving the signals emitted each X square meters from one or various sensors-actuators, is carried out with only two wires, one electrical signal wire and one data wire.

**6. GENERAL PURPOSE UNITARY TELEMATIC SYSTEM FOR THE MANAGEMENT OF SPACES,** according to claim 1, **characterized in that** each installation of the telematic system is provided with sensors and actuators specific of its own, but with identical performances and parameters and the network for all of the installations will be unique, and a unified management system will be applied to the same with the corresponding monitorization, registration, control and automation.

**7. GENERAL PURPOSE UNITARY TELEMATIC SYSTEM FOR THE MANAGEMENT OF SPACES,** according to claim 1, **characterized in that** the microprocessed equipments carry out a double function, the first function for the local control and regulation jobs, and the second function as gateway with the general network and the part of the system located in the cloud.

**8. GENERAL PURPOSE UNITARY TELEMATIC SYSTEM FOR THE MANAGEMENT OF SPACES,** according to claim 1, **characterized in that** the sensor device like which allows to capture a state (0 or 1 logical and scalar or vectorial magnitudes), sound or scenes.

**9. GENERAL PURPOSE UNITARY TELEMATIC SYSTEM FOR THE MANAGEMENT OF SPACES,** according to claim 1, **characterized in that** an actuator is an element that acts from relays or contactors for switch or through the use of variable signs (Power with modulation-PWM, tension levels and others) for actuation that allow regulation.

**10. GENERAL PURPOSE UNITARY TELEMATIC SYSTEM FOR THE MANAGEMENT OF SPACES,** according to claim 1, **characterized in that** the system is modular and has a data base of sensors/actuators, a second one of microprocessed equipment and a third one of services controlled in the building or offices.
